# EUROPEAN PATENT APPLICATION

(11) **EP 3 574 790 A1**
(43) Date of publication of application: **04.12.2019**
(21) Application number: 18745428.5
(22) Date of filing: 24.01.2018
(51) Int. Cl.: A43B 13/12, B32B 3/12, B32B 23/04

(54) **RUBBER COMPOUND, RUBBER SOLE, AND MANUFACTURING METHOD THEREFOR**

(30) Priority: 25.01.2017 CN 201710061314
(71) Applicant: Qingyuan Global Technology Services Ltd., Qingyuan City, Guangdong 51180 (CN)
(72) Inventor: LUH, Yih Ping, Taipei 104 (TW)
(74) Representative: dompatent von Kreisler Selting Werner - Partnerschaft von Patent- und Rechtsanwälten mbB
(86) International application number: PCT/CN2018/073970
(87) International publication number: WO 2018/137647

(57) **Abstract**

A rubber composite includes a textile layer and a rubber layer. The textile layer has an upper surface and a lower surface. The textile layer has multiple meshes formed by weaving at least one yarn. The rubber layer covers the upper surface and the lower surface of the textile layer, and a portion of the rubber layer extends into the multiple meshes to be located between the upper surface and the lower surface of the textile layer.

## Description

### BACKGROUND OF THE INVENTION

### 1. Field of the Invention

The invention generally relates to a rubber composite, a rubber sole, and a manufacturing method thereof. Particularly, the invention relates to a rubber composite for use in the outsole or insole of shoes, a rubber sole, and a manufacturing method thereof.

### 2. Description of the Prior Art

In order to make the user feel comfortable and reduce wearing burden, footwear soles often use elastic materials, such as rubber. However, in order to achieve a certain degree of support and to prevent the soles from being easily broken, rubber soles usually have a considerable thickness and weight, so that the weight of the shoes cannot be reduced, thereby increasing the user's wearing burden.

It is known that a cushion pad is formed by injection-molding rubber on a film, but the manufacturing cost of the injection molding technique is relatively high and the adhesion force of the rubber on the film is also weak, making the rubber easily separated from the film.

### SUMMARY OF THE INVENTION

In view of the prior arts, it is an object of the present invention to provide a rubber composite which utilizes a textile having mesh structure, so rubber can be bonded not only to the surfaces of the textile but also to the inner side of the meshes to promote the bonding between the rubber and the textile.

It is another object of the invention to provide a rubber composite which utilizes a textile layer formed by high-weight durable yarn to improve the support strength, so the rubber composite can have a relatively thinner thickness and is light-weighted and suitable for use in outsole or insole of shoes.

It is a further object of the invention to provide a method of forming a rubber composite, which utilizes the hot-pressing technique, so the rubber is melted and flows through the meshes of the textile to encapsulate the textile in various dimensions, such as upper surface, lower surface, and inner lateral surface of the meshes, to effectively promote the bonding between the rubber and the textile and reduce the production cost.

In an embodiment, the invention provides a rubber composite including a textile layer having an upper surface and a lower surface, and a rubber layer covering the upper surface and the lower surface of the textile layer; the textile layer has multiple meshes formed by weaving at least one yarn, and a portion of the rubber layer extends into the meshes to be located between the upper surface and the lower surface of the textile layer.

In an embodiment, the portion of the rubber layer extending into the meshes at least partially encapsulates an inner lateral surface of the at least one yarn of at least one mesh of the multiple meshes.

In an embodiment, the portion of the rubber layer extending into the meshes substantially completely fills in at least one mesh of the multiple meshes, so the at least one mesh has no unfilled space.

In an embodiment, the multiple meshes have an average mesh width between 0.2 mm and 4 mm.

In an embodiment, the at least one yarn is a 25-denier yarn capable of sustaining a weight of 1000 kilograms.

In an embodiment, the at least one yarn includes a chemical fiber yarn or glass fiber yarn.

In another embodiment, a rubber composite includes a textile layer having an upper surface and a lower surface, an upper rubber layer bonded to the upper surface layer of the textile layer, and a lower rubber layer bonded to the lower surface of the textile layer; the textile layer has multiple meshes formed by weaving at least one yarn, wherein at least one of the upper rubber layer and the lower rubber has a connecting portion passing through the multiple meshes to connect the upper rubber layer and the lower rubber layer.

In an embodiment, the connecting portion is bonded to an inner lateral surface of the at least one yarn of at least one mesh of the multiple meshes.

In an embodiment, the connecting portion substantially completely fills in the at least one mesh.

In another embodiment, the invention provides a rubber sole including the rubber composite mentioned above.

In an embodiment, the lower rubber layer has an upper surface and a lower surface; the upper surface of the lower rubber layer is bonded to the textile layer; the lower rubber layer has a plurality of protrusions protruding from the lower surface of the lower rubber layer.

In an embodiment, the textile layer includes a fist textile portion and a second textile portion disposed apart from each other; the first textile portion corresponds to a ball portion of a foot, and the second textile portion corresponds to a heel portion of the foot.

In an embodiment, the lower rubber layer includes a first rubber portion, a second rubber portion, and a third rubber portion; the first rubber portion and the second rubber portion are bonded to the first textile portion, and the third rubber portion is bonded to the second textile portion.

In an embodiment, the first rubber portion has a first sidewall; the second rubber portion has a second sidewall; the third rubber portion has a third sidewall; the first sidewall, the second sidewall, and the third sidewall protrude beyond the upper rubber layer to define a sole cavity.

In another embodiment, the invention provides a method of forming a rubber composite. The method includes (a) providing a textile layer formed by weaving at least one yarn, the textile layer having an upper surface and a lower surface, the textile layer having multiple meshes, (b) disposing an upper rubber layer on the upper surface of the textile layer, (c) disposing a lower rubber layer on the lower surface of the textile layer, and (d) hot-pressing a combination of the upper rubber layer, the textile layer, and the lower rubber layer in a mold, so at least one of the upper rubber layer and the lower rubber layer is at least partially melted to form a connecting portion, the connecting portion passing through the multiple meshes to connect the upper rubber layer and the lower rubber layer.

In an embodiment, the step (a) includes providing a textile layer having an average mesh width in a range of 0.2 mm to 4 mm.

In an embodiment, the step (a) includes providing a textile layer formed by a 25-denier yarn capable of sustaining a weight of 1000 kilograms.

In an embodiment, in the step (d), the connecting portion is at least partially bonded to an inner lateral surface of at least one of the multiple meshes.

In an embodiment, in the step (d), the mold has a predetermined pattern, so after the step (d), a plurality of protrusions protruding from a lower surface of the lower rubber layer are formed.

Compared with the prior art, the rubber composite, the rubber sole, and the method of manufacturing the rubber sole of the invention enable the rubber not only to be bonded to the surface of the textile but also to interconnect with the inner lateral surface of meshes of the textile to reinforce the bonding, increasing the support strength and allowing the rubber composite to have a relatively thinner thickness and a light weight, which is advantageous for use in sole or insole of footwears and reduces the manufacturing cost.

### BRIEF DESCRIPTION OF THE DRAWINGS

FIGs.1A and 1B are a perspective view and a partial cross-sectional view of a rubber composite in an embodiment of the invention, respectively.
FIG. 1C is a partial cross-sectional view of a rubber composite in another embodiment of the invention.
FIGs. 2A and 2B are schematic views of a textile layer in different embodiments of the invention.
FIGs. 3A and 3B are a perspective view and a partial cross-sectional view of a rubber composite in another embodiment of the invention, respectively.
FIG. 4 is a flowchart of a method of forming a rubber composite in an embodiment of the invention.
FIGs. 5A and 5B are schematic views showing the steps of the method of forming the rubber composite in an embodiment of the invention.
FIGs. 6A and 6B are a perspective view and a partial cross-sectional view of a rubber sole in an embodiment of the invention, respectively.
FIG. 7 is a schematic view showing the step of the method of forming the rubber composite in another embodiment of the invention.
FIGs. 8A and 8 are an exploded view and a perspective view of a rubber sole in another embodiment of the invention, respectively.

### DETAILED DESCRIPTION OF THE PREFERRED EMBODIMENT

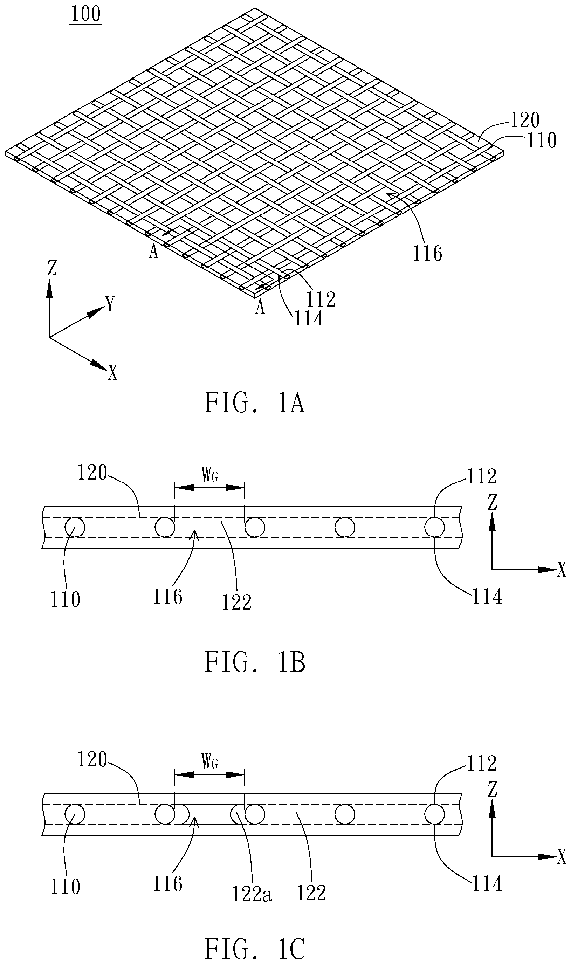

In the preferred embodiment, the rubber composite of the present invention can be used as a sole or insole for footwear based on its elasticity, lightness, thinness, and enhanced supportability, but not limited thereto. As shown in FIG. 1A and 1B, in an embodiment, the rubber composite 100 of the invention includes a textile layer 110 and a rubber layer 120 covering the textile layer 110. The textile layer 110 has an upper surface 112 and a lower surface 114. The textile layer 110 has multiple meshes 116 formed by weaving at least one yarn. The rubber layer 120 covers the upper surface 112 and the lower surface 114 of the textile layer 110, and a portion 122 of the rubber layer 120 extends into the meshes 116 to be located between the upper surface 112 and the lower surface 114 of the textile layer 110, so that the rubber layer 120 and the textile layer 110 are connected as an interlock structure.

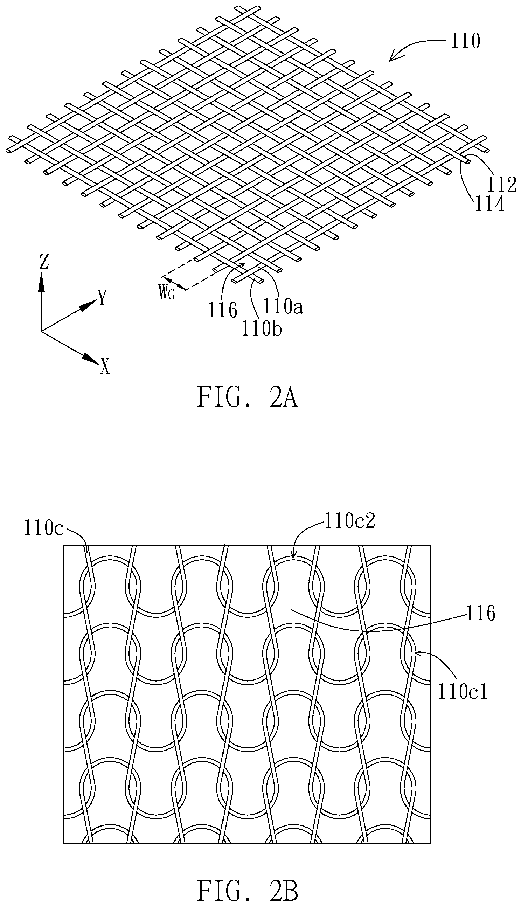

As shown in FIG. 2A, in an embodiment, the textile layer 110 has a mesh structure formed by weaving a plurality of yarns 110a and 110b, and the meshes 116 preferably have an average mesh width W_{G} between 0.2 mm and 4 mm and more preferably between 0.8 mm and 1.2 mm, but not limited thereto. In another embodiment, as shown in FIG. 2B, the textile layer 110 can be a grid structure having multiple courses 110c1 and multiple wales 110c2 formed by knitting at least a yarn 110c. The course 110c1 is defined as a meandering path along which the yarn is knitted. The extending direction of the wale 110c2 crosses the extending direction of the course 110c1. In other words, the course 110c1 is a horizontal row of needle loops. The wale 110c2 is a vertical column of intermeshed needle loops. The multiple needle loops formed by the multiple courses 110c1 and the multiple wales 110c2 serve as the meshes 116, and the meshes 116 preferably have an average mesh width W_{G} between 0.2 mm and 4 mm and more preferably between 0.8 mm and 1.2 mm. It is noted that the textile layer 110 can have different mesh structures to enhance stretchability and supportability, not limited to the embodiments of FIG. 2A and FIG. 2B.

The upper surface 112 ad the lower surface 114 of the textile layer 110 are the topmost surface and the bottommost surface of the mesh structure formed by the yarns 110a and 110b (or the yarn 110c). For example, when the textile layer 110 is a single-layer structure, the distance between the upper surface 112 and the lower surface 114 of the textile layer 110 is generally the thickness of the yarns. When the textile layer 110 is a multiple-layer mesh structure, the upper surface 112 and the lower surface 114 of the textile layer 114 are surfaces constructed by the topmost yarn and the bottommost yarn, respectively. In a preferred embodiment, the yarn 110a, 110b, or 110c is a 25-denier yarn capable of sustaining a weight of 1000 kilograms and more preferably capable of sustaining a weight of 2000 kilograms. Therefore, the textile layer 110 formed by such yarns can provide a greater supporting strength and is not easily broken. For example, the yarn 110a, 110b, or 110c is preferably a chemical fiber yarn or glass fiber yarn, such as fiber glass reinforced plastics (FRP) yarn, but not limited thereto. The supporting strength of the rubber composite 100 can be improved by using high strength yarns to form the textile layer 110. Therefore, the rubber composite 100 can have relative thinner thickness and is light weighted, so as to be suitable for the application of outsole or insole of shoes.

The textile layer 110 is preferably embedded in the rubber layer 120, so the rubber layer 120 is bonded not only to the two-dimensional planes (i.e. XY planes) where the upper surface 112 and the lower surface 114 of the textile layer 110 extend, but also to the inner lateral surface of at least one mesh of the multiple meshes 116 along the thickness direction between the upper surface 112 and the lower surface 114 of the textile layer 110 (i.e. Z direction). Therefore, the bonding force between the rubber layer 120 and the textile layer 110 can be enhanced. In other words, the rubber layer 120 is not only bonded to the yarns 110a and 110b (or 110c) of the upper surface 112 and the lower surface 114, but also exits within the meshes 116, so a portion of the rubber layer 120 is bonded to the inner lateral surface of at least one mesh 116. That is, the rubber layer 120 bonded to the upper surface 112 and the lower surface 114 of the textile layer 110 is interlocked with the textile layer 110 by having a portion of the rubber layer 120 bonded within or extended into the meshes 116 to form an interlock structure.

In an embodiment, the portion of the rubber layer 120 extending into the meshes 116 substantially completely fills in at least one mesh of the multiple meshes 116, so the at least one mesh substantially has no unfilled space. As shown in FIG. 1B, the portion of the rubber layer 120 extending into the meshes 116 substantially completely fills in the multiple meshes 116, so the meshes 116 of the textile layer 110 are filled with the portion 122 of the rubber layer 120 substantially without gaps. In other words, the rubber layer 120 substantially covers the yarns 110a and 110b (or 110c) that form the meshes 116, so the textile layer 110 is substantially embedded in the rubber layer 120, but not limited. In another embodiment, as shown in FIG. 1C, the portion 122a of the rubber layer 120 extending into the meshes 116 at least partially encapsulates an inner lateral surface of the at least one yarn 110a, 110b, or 110c of at least one mesh of the multiple meshes 116. That is, according to the process conditions, when the hot-pressing technique is used to enable the rubber layer 120 to cover the textile layer 110, the rubber layer 120 is melted and the portion 122a of the rubber layer 120 flows into the meshes 116 of the textile layer 110. After the rubber composite 100 is formed by hot-pressing, at least a portion of the meshes 116 is filled with rubber, and the bonding force between the rubber layer 120 and the textile layer 110 can be enhanced. The material of the rubber layer 120 can include any suitable rubber, such as natural rubber or synthetic rubber, and the rubber material which is suitable for outsole or insole of shoes is preferred.

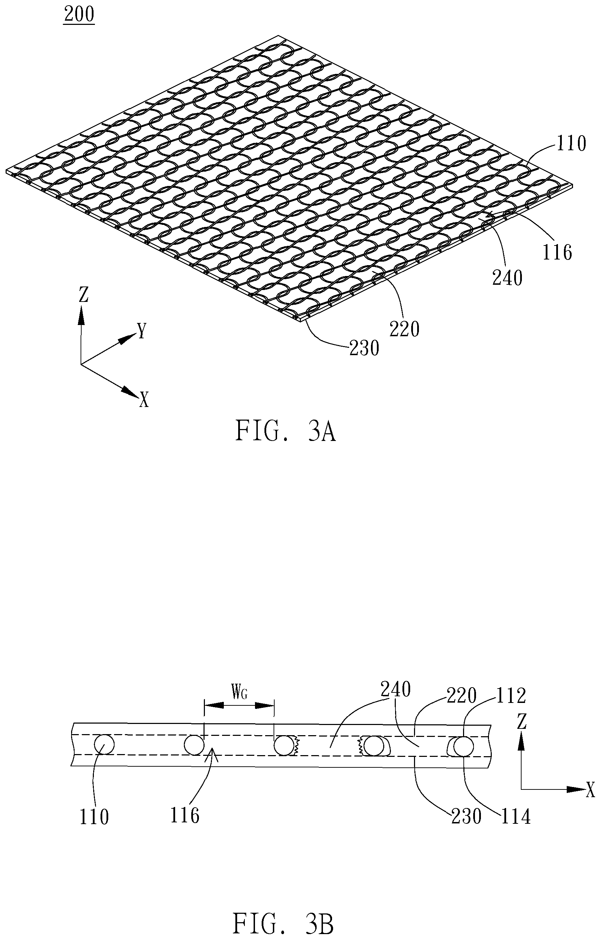

In another embodiment, as shown in FIG. 3A and FIG. 3B, the rubber composite 200 includes a textile layer 110, an upper rubber layer 220, and a lower rubber layer 230. The textile layer 110 can be the textile layer shown in FIG. 2A or FIG. 2B and have an upper surface 112 and a lower surface 114. The textile layer 110 has multiple meshes 116 formed by weaving at least one yarn. The upper rubber layer 220 is bonded to the upper surface layer 112 of the textile layer 110, and the lower rubber layer 230 is bonded to the lower surface 114 of the textile layer 110. At least one of the upper rubber layer 220 and the lower rubber 230 has a connecting portion 240 passing through the multiple meshes 116 to connect the upper rubber layer 220 and the lower rubber layer 230. In other words, the upper rubber layer 220 and the lower rubber layer 230 form a structure similar to the rubber layer 120 of FIG. 1A, and the connecting portion 240 is similar to the portion 122/122a of the rubber layer 120 of FIG. 1A and extends into the meshes 116. Preferably, the connecting portion 240 is a portion of at least one of the upper rubber layer 220 and the lower rubber layer 230 that passes through the meshes 116 and connects the upper rubber layer 220 and the lower rubber layer 230.

In this embodiment, the upper rubber layer 220 and the lower rubber layer 230 can have same material or different materials. The connecting portion 240 can be a portion of the upper rubber layer 220 and/or a portion of the lower rubber layer 230 that is melted and flows into the meshes 116 of the textile layer 110 during the hot-pressing process. After the rubber composite 200 is formed by hot-pressing, the connecting portion 240 is not only located within the meshes 116 of the textile layer 110, but also connect the upper rubber layer 220 and the lower rubber layer 230. In other words, the yarns of the upper surface 112 and the lower surface 114 of the textile layer 110 are bonded to the upper rubber layer 220 and the lower rubber layer 230, respectively, while the connecting portion 240 is located within the mesh 116 and preferably boned to the inner lateral surface of the mesh 116, and the upper end and the lower end of the connecting portion 240 passing through the mesh 116 are connected to the upper rubber layer 220 and the lower rubber layer 230, respectively. As such, the connection between the upper rubber layer 220 and the lower rubber layer 230 can be enhanced, and the bonding between the upper rubber layer 220 and the textile layer 110 and between the lower rubber layer 230 and the textile layer 110 can also be enhanced. Therefore, the bonding strength of the rubber composite 200 is enhanced, and the upper rubber layer 220 and the lower rubber layer 230 are not easily separated from the textile layer 110.

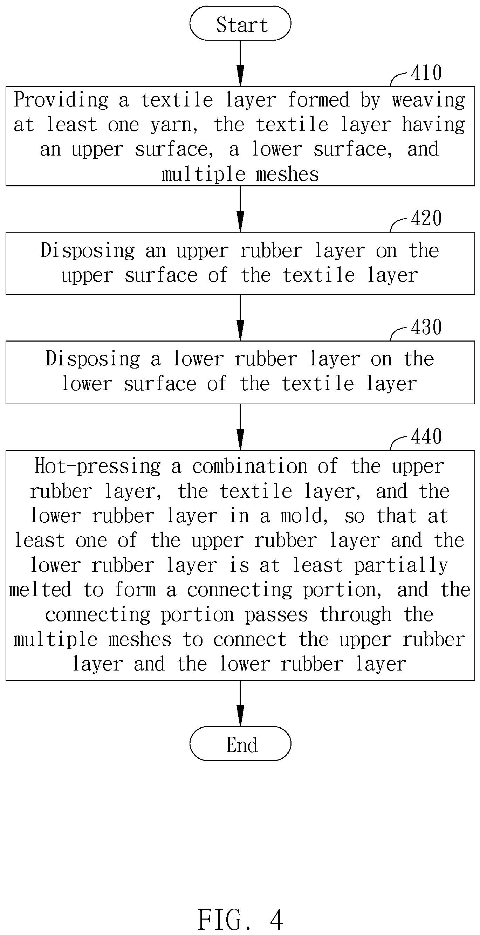

In another embodiment, as shown in the flowchart of FIG. 4, a method of forming a rubber composite of the invention includes the following steps.

At step 410, a step of providing a textile layer formed by weaving at least one yarn is provided, wherein the textile layer has an upper surface and a lower surface, and the textile layer has multiple meshes. Specifically, in step 410, the textile layer 110 of FIG. 2A or FIG. 2B can be provided. The textile layer 110 can include a mesh structure formed by weaving at least one yarn, 110a, 110b or 110c. The step 410 of providing the textile layer 110 may include providing a textile layer having an average mesh width in a range of 0.2 mm to 4 mm. Moreover, the step 410 of providing the textile layer 110 may include providing a textile layer formed by a 25-denier yarn capable of sustaining a weight of 1000 kilograms and preferably capable of sustaining a weight of 2000 kilograms.

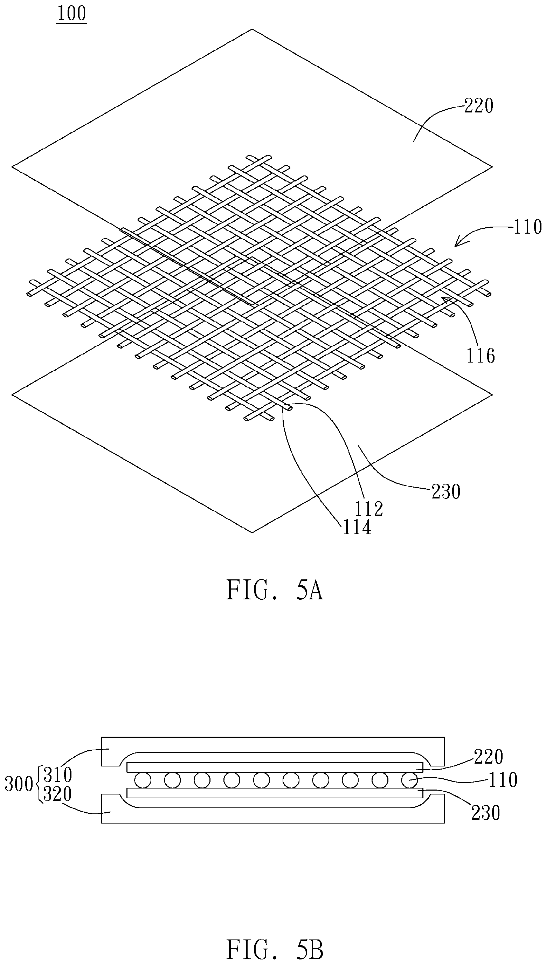

At step 420, a step of disposing an upper rubber layer on the upper surface of the textile layer is provided. At step 430, a step of disposing a lower rubber layer on the lower surface of the textile layer is provided. Specifically, as shown in FIG. 5A, the step 420 and the step 430 include disposing the rubber layers 220 and 230 of same or different materials on the upper surface 112 and the lower surface 114 of the textile layer 110, respectively, so that a combination of the textile layer 110 sandwiched between the upper rubber layer 220 and the lower rubber layer 230 is formed. In this embodiment. The melting point of the upper rubber layer 220 and the lower rubber layer 230 is preferably lower than the melting point of the yarn that forms the textile layer 110. Therefore, when the upper rubber layer 220 and the lower rubber layer 230 are melted, the textile layer 110 still remains the mesh structure with multiple meshes 116. Moreover, the steps of disposing the upper rubber layer 220 and the lower rubber layer 230 can be performed in a reverse order or at the same time, not limited to the embodiment of FIG. 4.

At step 440, a step of hot-pressing a combination of the upper rubber layer, the textile layer, and the lower rubber layer in a mold is provided, so that at least one of the upper rubber layer and the lower rubber layer is at least partially melted to form a connecting portion, and the connecting portion passes through the multiple meshes to connect the upper rubber layer and the lower rubber layer. Specifically, as shown in FIG. 5B, the mold 300 includes a first mold 310 and a second mold 320. The combination of the upper rubber layer 220, the textile layer 110, and the lower rubber layer 230 formed by the steps 410-430 is disposed between the first mold 310 and the second mold 320. The first mold 310 and the second mold 320 are heated and press against the combination of the upper rubber layer 220, the textile layer 110, and the lower rubber layer 230 to form the rubber composite 100 or 200 of FIG. 1A or FIG. 3A. Specifically, the heating temperature is preferably higher than the melting point of the upper rubber layer 220 and the lower rubber 230, so the upper rubber layer 220 and the lower rubber 230 are melted and bonded to the upper surface 112 and the lower surface 114 of the textile layer 110, respectively. The pressing force preferably enables a melted portion of at least one of the upper rubber layer 220 and the lower rubber 230 flows into the meshes 116 of the textile layer 110 to form the connecting portion 240. In addition, the heating temperature is preferably lower than the glass transition temperature Tg of the upper rubber layer 220 and the lower rubber 230 to prevent the upper rubber layer 220 and the lower rubber 230 from being harden and losing elasticity.

For example, at step 440, by using the hot-pressing technique, the connecting portion 240 is at least partially bonded to the inner lateral surface of at least one of the meshes 116, as shown in FIG. 1B, FIG. 1C, or FIG. 3B. Specifically, the textile layer 110 is preferably embedded into the rubber layers, so not only the rubber layers 220 and 230 are bonded to the two-dimensional planes (i.e. XY planes) where the upper surface 112 and the lower surface 114 of the textile layer 110 extend, but also the connecting portion 240 is bonded to the upper rubber surface 220 and the lower rubber surface 230 corresponding to at least one mesh of the multiple meshes 116 along the thickness direction between the upper surface 112 and the lower surface 114 of the textile layer 110 (i.e. Z direction). Therefore, the bonding force between the upper rubber layer 220 and the lower rubber layer 230 and between the upper rubber layer 220/ the lower rubber layer 230 and the textile layer 110 are enhanced. In other words, the rubber layers 220 and 230 are not only bonded to the yarns 110a and 110b (or the yarn 110c) of the upper surface 112 and the lower surface 114, but also exit within the meshes 116, so the upper rubber layer 220 and the lower rubber layer 230 form an interlock structure with the textile layer 110 by bonding the connecting portion 240 of the rubber layers 220 and 230 to the inner lateral surface of the meshes 116.

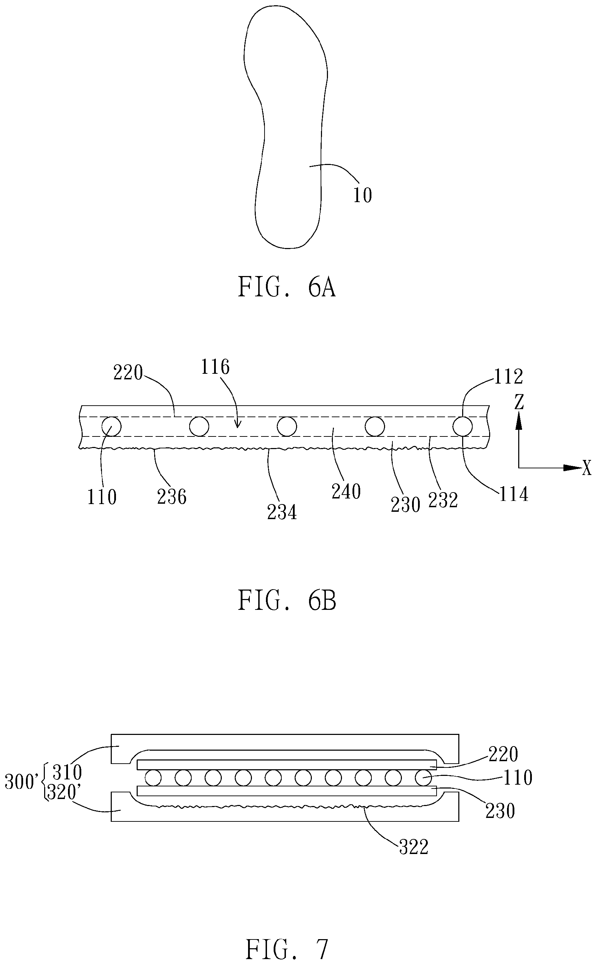

For a given support strength, the rubber composite 100 or 200 can have a relatively thinner thickness and is light-weighted, so the rubber composite 100 or 200 is very suitable for the application of outsole or insole of shoes without the problems of conventional thin rubber sole that is easily broken upon pulling, and is comparable to the strength provided by a conventional thick rubber sole. As shown in FIG. 6A and FIG. 6B, in an embodiment, a rubber sole 10 of the invention includes the rubber composite 100 or 200. Specifically, for the rubber composite 200, the lower rubber layer 230 has an upper surface 232 and a lower surface 234. The upper surface 232 of the lower rubber layer 230 is bonded to the lower surface 114 of the textile layer 110. The lower rubber layer 230 has a plurality of protrusions 236 protruding from the lower surface 234 of the lower rubber layer 230. In other words, when the rubber composite 100 or 200 is applied to the rubber sole 10 or insole, the lower surface 234 of the rubber layer 230 which serves as the bottom surface of the rubber sole 10 can have a rough surface to increase the friction coefficient and improve the non-slip effect.

Corresponding to the application of rubber composite 100 or 200 to the outsole or insole, the method of the invention further includes, in the step 440, providing a mold having a predetermined pattern, so a plurality of protrusions protruding from a lower surface of the lower rubber layer can be formed. Specifically, as shown in FIG. 7, the mold 300' includes a first mold 310 and a second mold 320', wherein the mold 320' can be a mold having a plurality of concave patterns 322. The combination of the upper rubber layer 220, the textile layer 110, and the lower rubber layer 230 formed by the steps 410-430 is disposed between the first mold 310 and the second mold 320' with the upper rubber layer 220 contacting the first mold 310 and the lower rubber layer 230 contacting the second mold 320'. The first mold 310 and the second mold 320' are heated and press against the combination of the upper rubber layer 220, the textile layer 110, and the lower rubber layer 230, so the upper rubber layer 220 and the lower rubber layer 230 are melted and bonded to the upper surface 112 and the lower surface 114 of the textile layer 110, respectively. A melted portion of at least one of the upper rubber layer 220 and the lower rubber 230 flows into the meshes 116 of the textile layer 110 to form the connecting portion 240 which connects the upper rubber layer 220 and the lower rubber layer 230. Moreover, a melted portion of the lower rubber layer 230 preferably flows into the concave patterns 322 to form the protrusions 236. Then, the rubber composite can be cut into a sole or insole shape to form the rubber sole 10 shown in FIG. 6A, but not limited thereto. In another embodiment, the textile layer 10 can be first cut into a desired shape corresponding to the sole or insole. Then, by modifying the design of the mold 300 or 300', the rubber composite 100 or 200 formed after the hot-pressing step can have the corresponding sole or insole shape, so the cutting step can be omitted after the hot-pressing step.

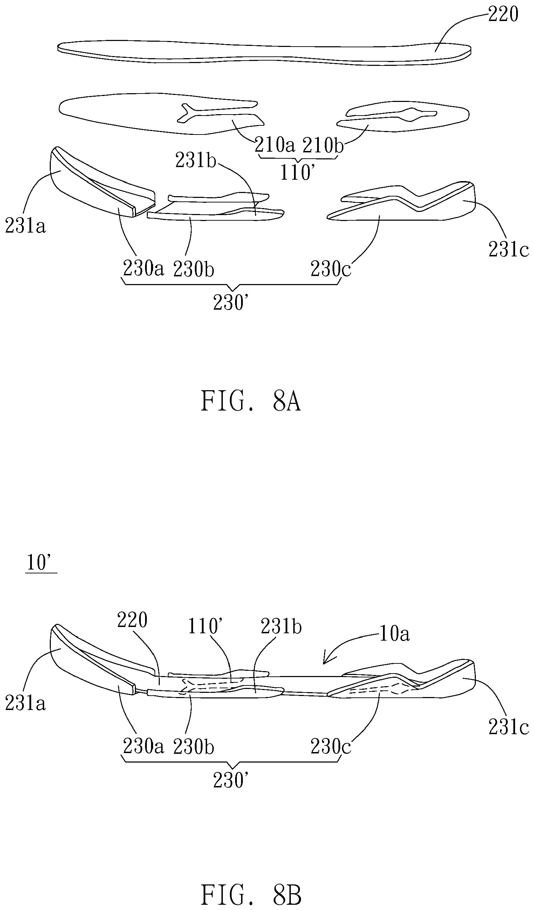

Moreover, in response to different types of shoes, the rubber sole made from the rubber composite 100 or 200 can have different designs. As shown in FIG. 8A and FIG. 8B, in an embodiment, the rubber sole 10' includes the upper rubber layer 220, a textile layer 110', and a lower rubber layer 230'. The textile layer 110' includes a fist textile portion 210a and a second textile portion 210b disposed apart from each other. The first textile portion 210a corresponds to a ball portion of a foot, and the second textile portion 210b corresponds to a heel portion of the foot. The details of the first textile portion 210a and the second textile portion 210b can be referred to the related descriptions of the textile layer 110 in the previous embodiments, such as having the multiple meshes 116, formed by weaving the yarns 110a and 110b (or the yarn 110c), and will not be elaborated again. The lower rubber layer 230' includes a first rubber portion 230a, a second rubber portion 230b, and a third rubber portion 230c. The first rubber portion 230a and the second rubber portion 230b are bonded to the first textile portion 210a, and the third rubber portion 230c is bonded to the second textile portion 210b. The first rubber portion 230a has a first sidewall 231a. The second rubber portion 230b has a second sidewall 231b. The third rubber portion 230c has a third sidewall 231c. The first sidewall 231a, the second sidewall 231b, and the third sidewall 231c protrude toward the upper rubber layer 220 and beyond the upper rubber layer 220 to define a sole cavity 10a.

Specifically, by modifying the design of the mold 300 or 300', during the hot-pressing step, the front portion of the upper rubber layer 220 and a portion of the first rubber portion 230a and the second rubber portion 230b are melted and flow into the meshes of the first textile portion 210a to connect the upper rubber layer 220 and the first rubber portion 230a and the second rubber portion 230b. The rear portion of the upper rubber layer 220 and a portion of the third rubber portion 230c are melted and flow into the meshes of the second textile portion 210b to connect the upper rubber layer 220 and the third rubber portion 230c. Moreover, the first rubber portion 230a, the second rubber portion 230b, and the third rubber portion 230c are melted to correspondingly form the first sidewall 231a, the second sidewall 231b, and the third sidewall 231c. As such, the rubber sole 10' is formed and the bendability and functionality of the rubber sole 10' are enhanced by the textile layer 110' with the separately disposed first textile portion 210a and second textile portion 210b and the lower rubber layer 230' with separately disposed first rubber portion 230a, second rubber portion 230b, and third rubber portion 230c. Moreover, the lower surface of the first rubber portion 230a, the second rubber portion 230b, and the third rubber portion 230c can be also formed with the protrusions 236 shown in FIG. 6A to increase the friction force and improve the non-slip effect.

Although the preferred embodiments of the present invention have been described herein, the above description is merely illustrative. The preferred embodiments disclosed will not limit the scope of the present invention. Further modification of the invention herein disclosed will occur to those skilled in the respective arts and all such modifications are deemed to be within the scope of the invention as defined by the appended claims.

## Claims

1. A rubber composite, comprising:
a textile layer having an upper surface and a lower surface, the textile layer having multiple meshes formed by weaving at least one yarn; and
a rubber layer covering the upper surface and the lower surface of the textile layer, a portion of the rubber layer extending into the meshes to be located between the upper surface and the lower surface of the textile layer.

2. The rubber composite of claim 1, wherein the portion of the rubber layer extending into the meshes at least partially encapsulates an inner lateral surface of the at least one yarn of at least one mesh of the multiple meshes.

3. The rubber composite of claim 1, wherein the portion of the rubber layer extending into the meshes substantially completely fills in at least one mesh of the multiple meshes, so the at least one mesh has no unfilled space.

4. The rubber composite of claim 1, wherein the multiple meshes have an average mesh width between 0.2 mm and 4 mm.

5. The rubber composite of claim 1, wherein the at least one yarn is a 25-denier yarn capable of sustaining a weight of 1000 kilograms.

6. The rubber composite of claim 5, wherein the at least one yarn includes a chemical fiber yarn or glass fiber yarn.

7. A rubber composite, comprising:
a textile layer having an upper surface and a lower surface, the textile layer having multiple meshes formed by weaving at least one yarn;
an upper rubber layer bonded to the upper surface layer of the textile layer; and
a lower rubber layer bonded to the lower surface of the textile layer,
wherein at least one of the upper rubber layer and the lower rubber has a connecting portion passing through the multiple meshes to connect the upper rubber layer and the lower rubber layer.

8. The rubber composite of claim 7, wherein the connecting portion is bonded to an inner lateral surface of the at least one yarn of at least one mesh of the multiple meshes.

9. The rubber composite of claim 8, wherein the connecting portion substantially completely fills in the at least one mesh.

10. The rubber composite of claim 7, wherein the multiple meshes have an average mesh width in a range of 0.2 mm to 4 mm.

11. The rubber composite of claim 7, wherein the at least one yarn is a 25-denier yarn capable of sustaining a weight of 1000 kilograms.

12. The rubber composite of claim 11, wherein the at least one yarn includes a chemical fiber yarn or glass fiber yarn.

13. A rubber sole comprising the rubber composite of any of claims 1 to 6.

14. A rubber sole comprising the rubber composite of any of claims 7 to 12.

15. The rubber sole of claim 14, wherein the lower rubber layer has an upper surface and a lower surface; the upper surface of the lower rubber layer is bonded to the textile layer; the lower rubber layer has a plurality of protrusions protruding from the lower surface of the lower rubber layer.

16. The rubber sole of claim 14, wherein the textile layer comprises a fist textile portion and a second textile portion disposed apart from each other; the first textile portion corresponds to a ball portion of a foot, and the second textile portion corresponds to a heel portion of the foot.

17. The rubber sole of claim 16, wherein the lower rubber layer includes a first rubber portion, a second rubber portion, and a third rubber portion; the first rubber portion and the second rubber portion are bonded to the first textile portion, and the third rubber portion is bonded to the second textile portion.

18. The rubber sole of claim 17, wherein the first rubber portion has a first sidewall; the second rubber portion has a second sidewall; the third rubber portion has a third sidewall; the first sidewall, the second sidewall, and the third sidewall protrude beyond the upper rubber layer to define a sole cavity.

19. A method of forming a rubber composite, comprising:
(a) providing a textile layer formed by weaving at least one yarn, the textile layer having an upper surface and a lower surface, the textile layer having multiple meshes;
(b) disposing an upper rubber layer on the upper surface of the textile layer;
(c) disposing a lower rubber layer on the lower surface of the textile layer; and
(d) hot-pressing a combination of the upper rubber layer, the textile layer, and the lower rubber layer in a mold, so at least one of the upper rubber layer and the lower rubber layer is at least partially melted to form a connecting portion, the connecting portion passing through the multiple meshes to connect the upper rubber layer and the lower rubber layer.

20. The method of claim 19, wherein the step (a) includes providing a textile layer having an average mesh width in a range of 0.2 mm to 4 mm.

21. The method of claim 19, wherein the step (a) includes providing a textile layer formed by a 25-denier yarn capable of sustaining a weight of 1000 kilograms.

22. The method of claim 19, wherein in the step (d), the connecting portion is at least partially bonded to an inner lateral surface of at least one of the multiple meshes.

23. The method of claim 19, wherein in the step (d), the mold has a predetermined pattern, so after the step (d), a plurality of protrusions protruding from a lower surface of the lower rubber layer are formed.
